# FASCICULE DE BREVET EUROPEEN

(11) **EP 4 480 729 B1**
(45) Date de publication et mention de la délivrance du brevet: **15.10.2025**
(21) Numéro de dépôt: 24181837.6
(22) Date de dépôt: 12.06.2024
(51) Int. Cl.: B60K 15/07, B25B 1/20, F17C 13/08, B60K 15/03

(54) **DISPOSITIF DE SERRAGE D'UN OBJET COMPRENANT UNE CEINTURE**
VORRICHTUNG ZUM SPANNEN EINES GEGENSTANDES MIT EINEM GURT
DEVICE FOR CLAMPING AN OBJECT COMPRISING A BELT

(30) Priorité: 21.06.2023 FR 2306425
(43) Date de publication de la demande: 25.12.2024
(73) Titulaire: Caillau, 41200 Romorantin-Lanthenay (FR)
(72) Inventeur: BLANCHET, Martial, 41200 ROMORANTIN-LANTHENAY (FR); IBANEZ, Leny, 41210 MARCILLY EN GAULT (FR)
(74) Mandataire: Cabinet Beau de Loménie

(56) Documents cités:
- JP-A- 2010 175 001
- JP-A- 2012 081 807
- KR-B1- 102 022 558
- US-A- 6 042 071
- US-A1- 2015 096 977
- US-A1- 2016 097 487
- US-A1- 2019 160 941

## Description

### Domaine Technique

L'exposé se rapporte à un dispositif de serrage comprenant une ceinture de serrage pour serrer un objet, comme par exemple, dévoilé dans le document de l'art antérieur US2016/097487A1.

Il s'agit en particulier d'un dispositif de serrage pour serrer un objet pouvant connaître des dilatations alors que le serrage doit être maintenu. En particulier, cet objet peut être un réservoir à hydrogène et le dispositif de serrage peut permettre de maintenir ce réservoir serré et de le fixer à un support tel qu'une partie de châssis d'un véhicule. Un réservoir à hydrogène connaît des dilatations significatives. En effet, la pression de remplissage d'un tel réservoir atteint classiquement plusieurs centaines de bars, par exemple de 350 à 750 bars. Un tel réservoir peut être en matériau divers, par exemple un matériau composite éventuellement renforcé de fibres tel que des fibres de carbone. Les pressions très importantes de remplissage conduisent à dilater ce réservoir, tandis qu'il se rétracte au fur et à mesure que sa pression interne diminue lorsque l'hydrogène est consommé.

De manière générale, le dispositif de serrage selon l'exposé peut servir à serrer d'autres objets pouvant connaître une dilatation, mais pour lesquels il est important de maintenir le serrage au gré de sa dilatation.

L'objet en question peut en particulier être de forme cylindrique, ou au moins comporter une portion de serrage dans lequel il présente une symétrie de révolution. Le dispositif de serrage comprend une ceinture qui est serrée sur la portion de serrage de cet objet. La ceinture serrée doit pouvoir accompagner les dilatations de cet objet, c'est-à-dire que ses dimensions diamétrales doivent pouvoir augmenter ou diminuer tout en maintenant l'effort de serrage.

A cette fin, le dispositif de serrage peut comprendre un ressort. Pour réaliser le serrage de cet objet, la ceinture doit être mise en place autour de la portion de serrage dudit objet, et pouvoir être serrée dans cette situation. Les efforts en jeu au cours de cette mise en place et de ce serrage peuvent être importants, du fait des efforts de réaction exercés par l'objet sur la ceinture et des efforts de rappel exercés par le ressort, à l'encontre de l'effort de serrage. Ainsi, il peut être difficile de monter et/ou de positionner la ceinture autour de l'objet et de réaliser le serrage tout en maintenant correctement cette ceinture et ce ressort.

### Exposé de l'invention

L'exposé concerne un dispositif de serrage comprenant une ceinture de serrage, un organe de serrage qui déplace des extrémités de la ceinture l'une par rapport à l'autre pour serrer la ceinture, et un ressort servant à maintenir l'effort de serrage exercé par la ceinture, malgré les possibles dilatations de l'objet serré par le dispositif.

L'exposé vise à proposer un tel dispositif de serrage dont la mise en place sur l'objet à serrer et le serrage autour de cet objet puisse être réalisé de manière simple, en particulier sans risquer de perdre le ressort ou de réaliser des manipulations complexes pour le maintenir en place avant et pendant le serrage.

Ainsi, selon un premier aspect, l'exposé concerne un dispositif de serrage d'un objet, comprenant une ceinture ayant au moins une première et une deuxième extrémité de serrage et un organe de serrage qui relie les deux extrémités de serrage en étant retenu par rapport à ces dernières de sorte que le serrage de l'organe de serrage déplace les première et deuxième extrémités de serrage l'une par rapport à l'autre en serrant la ceinture, l'organe de serrage étant retenu par rapport à au moins la première extrémité de serrage via un ressort et une pièce de liaison, de sorte que le serrage de l'organe de serrage tend à déplacer la pièce de liaison par rapport à la première extrémité de serrage à l'encontre du rappel élastique du ressort, la pièce de liaison étant apte à occuper, par rapport à la première extrémité de serrage, une position d'attente dans laquelle elle maintient le ressort vis-à-vis de la première extrémité de serrage.

Le serrage de la ceinture est réalisé en déplaçant l'une par rapport à l'autre les première et deuxième extrémités de serrage par le serrage de l'organe de serrage, c'est-à-dire par l'activation ou l'actionnement de ce dernier dans le sens du serrage. Cependant, cet organe de serrage est retenu par rapport à la première extrémité de la ceinture via le ressort et la pièce de liaison, de sorte que le serrage de l'organe de serrage a pour effet de déplacer la pièce de liaison par rapport à la première extrémité de serrage à l'encontre du rappel élastique du ressort. Plus précisément, le serrage de l'organe de serrage déplace le ressort qui, sous réserve de sa déformation élastique, entraine la première extrémité de serrage de sorte qu'elle se déplace par rapport à la deuxième extrémité de serrage, et ce déplacement du ressort provoque également celui de la pièce de liaison.

On comprend donc que, lorsque l'organe de serrage coopère avec les première et deuxième extrémités pour les serrer, il tend à déplacer la première extrémité en exerçant d'abord un effort sur le ressort. Par exemple, si ce ressort travaille en compression, le serrage s'exerce sur la pièce de liaison qui tend à comprimer le ressort et, lorsque le niveau de compression satisfaisant est atteint, celui-ci entraîne le déplacement de la première extrémité de serrage par rapport à la deuxième extrémité de serrage. On comprend donc que le ressort permet, selon son niveau de compression, de maintenir le serrage en assurant le bon positionnement de la deuxième extrémité de serrage de la ceinture par rapport à la première.

Cependant, avant le serrage, la pièce de liaison occupe sa position d'attente dans laquelle elle maintient le ressort vis-à-vis de la première extrémité de serrage. Ainsi, le ressort est prémonté à la première extrémité de la ceinture en étant maintenu correctement par rapport à la pièce de liaison. Le dispositif de serrage peut donc être mis en place autour de l'objet à serrer sans risquer de perdre le ressort ou sans devoir le manipuler. Une fois le dispositif de serrage mis en place sur l'objet à serrer, le serrage peut être réalisé par l'organe de serrage.

Optionnellement, le dispositif comprend un organe de maintien de la pièce de liaison en position d'attente, en particulier un organe de clipsage d'attente.

Optionnellement, la pièce de liaison est apte à occuper une position de seuil de serrage qui est atteinte par le serrage de l'organe de serrage.

Optionnellement, le dispositif comprend un repère de seuil pour constater que la position de seuil de serrage est atteinte, le repère de seuil comprenant en particulier un organe de clipsage de seuil.

Optionnellement, la pièce de liaison est apte à occuper une position de limite de serrage maximal, le dispositif comprenant optionnellement une butée de serrage maximal.

Optionnellement, la pièce de liaison forme une partie de cage dans laquelle le ressort est disposé, la pièce de liaison présentant optionnellement une portion de centrage du ressort.

Optionnellement, l'organe de serrage comprend une tige de serrage et la partie de cage formée par la pièce de liaison présente une surface de retenue contre laquelle est retenu un élément de retenue de la tige de serrage, tel qu'une tête de ladite tige, ladite surface de retenue comprenant optionnellement un organe anti-rotation de la tige de serrage et étant optionnellement située sur une face externe de la portion de centrage du ressort.

Optionnellement, la pièce de liaison présente une forme en U présentant deux branches, la pièce de liaison étant enfichée sur la première extrémité de serrage de sorte que cette première extrémité de serrage passe entre les deux branches, l'organe de maintien de la pièce de liaison en position d'attente comprenant au moins une saillie de maintien en saillie sur la face interne d'au moins l'une des deux branches.

Optionnellement, la pièce de liaison présente une forme en U présentant deux branches, la pièce de liaison étant enfichée sur la première extrémité de serrage de sorte que cette première extrémité de serrage passe entre les deux branches, le repère de seuil comprenant une saillie de repère en saillie sur la face interne d'au moins l'une des deux branches.

Optionnellement, la pièce de liaison présente une forme en U présentant deux branches, la pièce de liaison étant enfichée sur la première extrémité de serrage de sorte que cette première extrémité de serrage passe entre les deux branches, au moins l'une des deux branches présentant une saillie de butée de serrage maximal.

Optionnellement, l'organe de serrage comprend une tige de serrage qui est retenue par rapport à la deuxième extrémité de serrage de la ceinture par un écrou.

Optionnellement, la ceinture comprend une première partie de ceinture dont une première extrémité forme l'une des première et deuxième extrémités de serrage et une deuxième partie de ceinture dont une première extrémité forme l'autre des première et deuxième extrémités de serrage, ladite deuxième partie de ceinture formant une partie de fixation configurée pour être fixée sur un support.

Optionnellement, la ceinture comprend une première partie de ceinture dont une première extrémité forme l'une des première et deuxième extrémités de serrage et une deuxième partie de ceinture dont une première extrémité forme l'autre des première et deuxième extrémités de serrage, les deuxièmes extrémités des première et deuxième parties de ceinture étant reliées par une articulation.

Optionnellement, la deuxième extrémité de la deuxième partie de ceinture présente une zone de retenue, par rapport à laquelle la deuxième extrémité de la première partie de ceinture est retenue à pivotement par un axe de pivotement, la zone de retenue comprenant en particulier une fente dans laquelle est insérée la deuxième extrémité de la première partie de ceinture.

Optionnellement, la première partie de ceinture présente une zone de torsion amenant la deuxième extrémité de la première partie de ceinture sensiblement à angle droit par rapport à une partie courante de la première partie de ceinture, l'axe de pivotement étant perpendiculaire par rapport à ladite deuxième extrémité de la première partie de ceinture, en particulier en étant engagé dans un perçage de la deuxième extrémité de la première partie de ceinture, ce perçage présentant optionnellement un collet.

Optionnellement, la deuxième extrémité de la première partie de ceinture présente un pli longitudinal selon lequel deux moitiés de bande de la première partie de ceinture sont ramenées l'une contre l'autre, en étant optionnellement retenues plaquées l'une contre l'autre, par exemple par soudure ou clinchage.

Optionnellement, la première partie de ceinture présente un bossage situé de l'autre côté de la zone de torsion par rapport à la deuxième extrémité de la première partie de ceinture.

Optionnellement, la deuxième extrémité de la première partie de ceinture présente deux pattes parallèles insérées chacune dans une fente de la zone de retenue.

Optionnellement, les deux pattes sont séparées par une découpe et la deuxième extrémité de la première partie de ceinture présente une zone de torsion comprenant deux torsions amenant chacune des pattes sensiblement à angle droit par rapport à une partie courante de la première partie de ceinture.

L'exposé vise également à proposer un dispositif de serrage qui comprend une ceinture ayant deux parties de ceinture articulées l'une par rapport à l'autre. Il s'agit alors de proposer une articulation simple et facile à mettre en œuvre, et pouvant supporter des efforts de tension importants, en particulier lorsque le dispositif de serrage sert à appliquer des forces de serrage importantes, par exemple de l'ordre de 300 à 800 dN, notamment lorsque le dispositif de serrage sert à serrer un objet de type réservoir à hydrogène.

Selon un deuxième aspect, l'exposé concerne également un dispositif de serrage d'un objet, comprenant une ceinture comprenant une première partie de ceinture dont une première extrémité forme une première extrémité de serrage et une deuxième partie de ceinture dont une première extrémité forme une deuxième extrémité de serrage, les premières extrémités des première et deuxième parties de ceinture pouvant être déplacées l'une par rapport à l'autre pour serrer la ceinture, la première partie de ceinture présentant une zone de torsion amenant la deuxième extrémité de la première partie de ceinture sensiblement à angle droit par rapport à une partie courante de la première partie de ceinture, et la deuxième extrémité de la deuxième partie de ceinture présentant une zone de retenue, par rapport à laquelle la deuxième extrémité de la première partie de ceinture est retenue à pivotement par un axe de pivotement perpendiculaire par rapport à ladite deuxième extrémité de la première partie de ceinture, en particulier en étant engagé dans un perçage de la deuxième extrémité de la première partie de ceinture.

La périphérie interne de la ceinture définit globalement une surface cylindrique ou une portion de surface cylindrique de serrage parallèlement à laquelle est orientée la partie courante de la ceinture, en particulier la partie courante de la première partie de ceinture. Cependant, du fait de la torsion de la première partie de ceinture, la deuxième extrémité de cette première partie est amenée à angle droit par rapport à cette partie courante, ce qui permet de la faire coopérer aisément avec la zone de retenue de la deuxième extrémité de la deuxième partie de ceinture en la retenant par rapport à elle par l'axe de pivotement perpendiculaire à la deuxième extrémité de la première partie de ceinture. Lorsque, en particulier, l'axe est engagé dans un perçage de la deuxième extrémité de la première partie de ceinture, la coopération entre l'axe de pivotement et cette première partie de ceinture peut supporter d'importants efforts, alors que la structure et la fabrication de la ceinture peuvent être particulièrement simples et nécessitent peu de matériau.

Optionnellement, selon le deuxième aspect, la zone de retenue comprend une fente dans laquelle est insérée la deuxième extrémité de la première partie de ceinture, de sorte que l'axe de pivotement soit situé de l'autre côté de la fente par rapport à la partie courante de la première partie de ceinture.

Optionnellement, selon le deuxième aspect, la deuxième extrémité de la première partie de ceinture présente un pli longitudinal selon lequel deux moitiés de bande de la première partie de ceinture sont ramenées l'une contre l'autre, en étant optionnellement retenues plaquées l'une contre l'autre, par exemple par soudure ou clinchage.

Optionnellement, selon le deuxième aspect, la première partie de ceinture présente un bossage situé de l'autre côté de la zone de torsion par rapport à la deuxième extrémité de la première partie de ceinture.

Optionnellement, selon le deuxième aspect, la deuxième extrémité de la première partie de ceinture présente deux pattes parallèles insérées chacune dans une fente de la zone de retenue.

Optionnellement, selon le deuxième aspect, les deux pattes sont séparées par une découpe et la deuxième extrémité de la première partie de ceinture présente une zone de torsion comprenant deux torsions amenant chacune des pattes sensiblement à angle droit par rapport à une partie courante de la première partie de ceinture.

### Brève description des dessins

L'exposé sera bien compris et ses avantages apparaîtront mieux à la lecture de la description détaillée qui suit, de modes de réalisation représentés à titre d'exemples non limitatifs. La description se réfère aux dessins annexés sur lesquels :
[Fig. 1] La figure 1 est une vue en perspective du dispositif de serrage selon le présent exposé.
[Fig. 2] La figure 2 est une vue de face du dispositif de la figure 1.
[Fig. 3] La figure 3 est une vue en perspective éclatée montrant plusieurs composants ou parties de composants du dispositif selon le présent exposé.
[Fig. 4] La figure 4 est une vue en perspective du dispositif selon le présent exposé, avec un agrandissement dans la zone de serrage, la pièce de liaison étant dans sa position d'attente.
[Fig. 5] La figure 5 est une vue de côté de la pièce de liaison.
[Fig. 6] La figure 6 est une vue en perspective du dispositif, montrant des agrandissements dans la zone de serrage et dans une zone d'articulation, la pièce de liaison étant représentée dans une position de seuil de serrage.
[Fig. 7] La figure 7 est une vue en perspective du dispositif, avec un agrandissement dans la zone de serrage, la pièce de liaison étant représentée dans la position de seuil de serrage.
[Fig. 8] La figure 8 est une vue en perspective du dispositif, avec des agrandissements dans la zone de serrage et dans la zone d'articulation.
[Fig. 9] La figure 9 est une vue en perspective montrant une partie du dispositif de serrage selon une variante de réalisation.
[Fig. 10] La figure 10 montre en perspective la pièce de liaison selon une variante.
[Fig. 11] La figure 11 illustre une autre variante pour la pièce de liaison.
[Fig. 12] La figure 12 montre en perspective une variante pour la configuration de la zone d'articulation.
[Fig. 13] La figure 13 montre la même variante que la figure 12, selon un autre angle de vue.

### Description des modes de réalisation

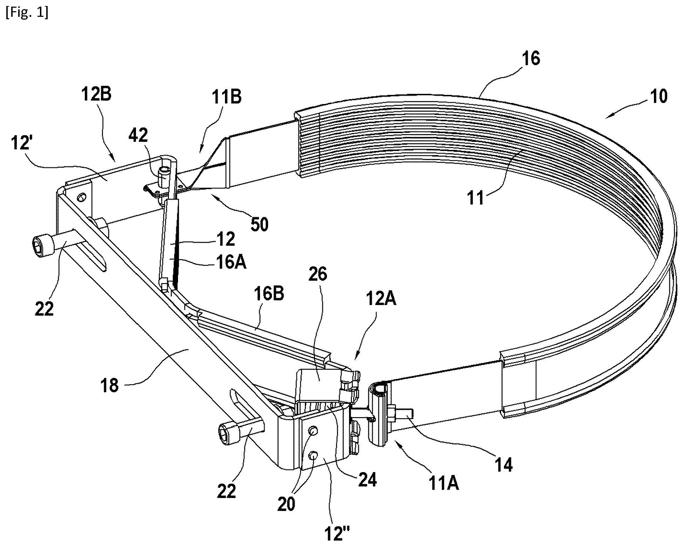

Le dispositif représenté sur la figure 1 comprend une ceinture 10 qui, en l'espèce, comprend une première partie de ceinture 11 et une deuxième partie de ceinture 12 reliées entre elles. La ceinture présente une première extrémité de serrage 12A qui, en l'espèce, est formée par une extrémité de la deuxième partie de ceinture 12, et une deuxième extrémité de serrage 11A qui, en l'espèce, est formée par une extrémité de la première partie de ceinture 11. Bien entendu, les première et deuxième extrémités de serrage pourraient être inversées.

Au sens du présent exposé, sauf précision différente, les éléments qualifiés de interne ou intérieur sont ceux qui sont disposés du côté interne de la ceinture, c'est-à-dire dans l'espace annulaire délimité par la ceinture, tandis que les éléments externes ou extérieurs sont ceux qui sont disposés du côté opposé. De même, sauf précision différente, on considèrera qu'un élément sera qualifié de "interne" par rapport à un autre élément dit "externe" lorsque l'élément interne sera plus proche de l'intérieur de la ceinture ou de l'axe de cette dernière, que l'élément externe. Ici, l'axe de la ceinture peut être défini par l'axe d'un cercle circonscrit à la ceinture.

Un organe de serrage 14 relie les deux extrémités de serrage 11A et 12A. En l'espèce, les parties de ceinture 11 et 12 sont reliées par une articulation à leurs deuxièmes extrémités 11B et 12B respectives. On voit que, lorsqu'elles sont assemblées, les deux parties de ceinture définissent entre elles un contour interne pouvant recevoir un objet devant être serré par le dispositif, en particulier une portion de serrage d'un tel objet qui peut par exemple être un réservoir d'hydrogène. Ainsi, le dispositif peut serrer une partie cylindrique de révolution ou, de manière générale, une forme pouvant être ceinturée par la ceinture.

De manière générale, les différents éléments constitutifs du dispositif sont réalisés en métal. C'est en particulier le cas de la ceinture. Cependant, des parties de contact de serrage, pouvant être au contact de l'objet à serrer en exerçant une pression de serrage sur ce dernier, peuvent être revêtues d'un matériau tel qu'un matériau élastomère de type EPDM (éthylène-propylène-diène monomère). On voit ainsi qu'une partie courante de la partie de ceinture 11 est revêtue, sur sa face interne, d'une gaine 16 et que, de même, la deuxième partie de ceinture 12 présente des parties de contact avec l'objet à serrer également revêtues de gaines 16A, 16B sur leurs faces internes. Les gaines offrent des surfaces de contact entre le dispositif et l'objet serré qui ne soient pas blessantes pour cet objet. De plus, elles peuvent présenter des propriétés antidérapantes, par exemple en étant striées comme dans l'exemple représenté. Ces gaines peuvent localement recouvrir toutes les faces de la portion de ceinture concernée ou bien, comme dans l'exemple représenté, ne revêtir que la face interne en étant solidarisées à la ceinture par tout moyen, par exemple par des gorges des côtés de la gaine, dans laquelle les bords de la ceinture sont à serrer.

En l'espèce, la première partie de ceinture 11 forme une partie de cerclage, en ayant un contour en forme de portion de cylindre de révolution, pour venir en appui de serrage contre la surface cylindrique de l'objet à serrer. De son côté, la deuxième partie de ceinture forme en l'espèce une partie de fixation qui est configurée pour être fixée sur un support. De fait, cette deuxième partie de ceinture 12 est en l'espèce montée sur une partie de support 18, à laquelle elle est par exemple reliée par des vis, des rivets ou des points de soudure 20, par ses branches de liaison 12' et 12". Cette partie de support 18 peut former une réglette ou une équerre de support ou analogues, fixée à un élément de support tel qu'une partie de véhicule ou de châssis de véhicule par tout moyen approprié, par exemple par des pattes de fixation ou des vis 22. En l'espèce, la deuxième partie de ceinture 12 est fixée au support 18 et présente à cet effet des ailes latérales 12' et 12" qui sont pliées dans un sens allant en s'éloignant de la périphérie interne de la ceinture pour venir se fixer sur des zones de fixation du support 18.

En l'espèce, la deuxième partie de ceinture 12 a une forme globalement en V, les branches du V formant des portions d'appui sur l'objet à serrer. C'est sur ces branches que sont disposées les gaines 16A et 16B.

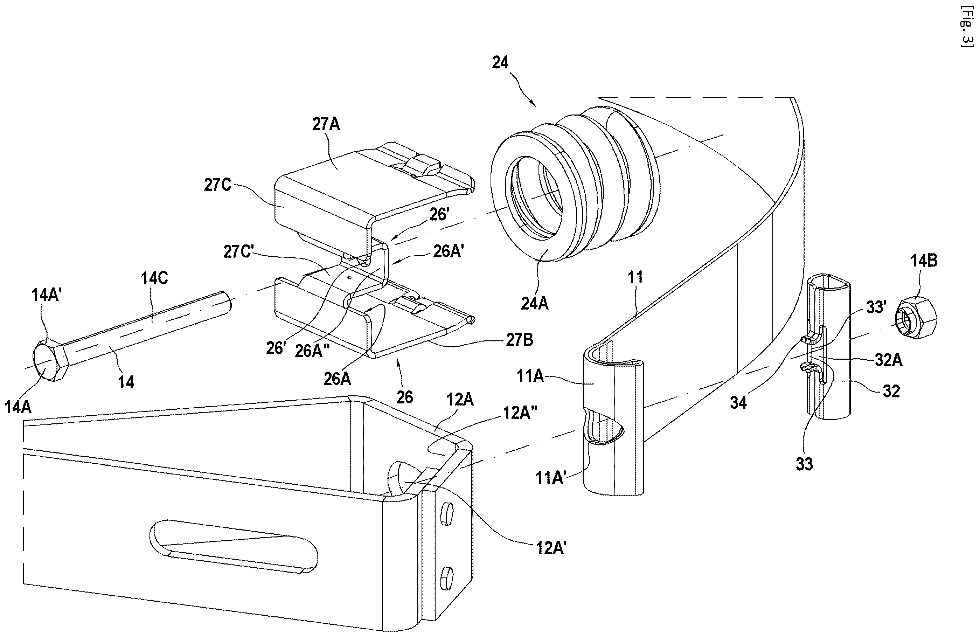

Comme on le voit notamment sur la figure 3, l'organe de serrage comprend une tige de serrage, par exemple une vis 14, qui est retenue par rapport à la première extrémité de serrage 12A par un organe de retenue tel qu'une tête 14A de la vis, et qui est retenue à la deuxième extrémité de serrage 11A par un organe de retenue tel qu'un écrou 14B. La tige 14C de la vis traverse des perçages des extrémités de serrage, à savoir un perçage 12A' de la première extrémité de serrage 12A et un perçage 11A' de la deuxième extrémité de serrage 11A (voir figure 3).

Bien entendu, on pourrait inverser la tête 14A et l'écrou 14B, ou bien prévoir que la tige de serrage soit une tige filetée à ses deux extrémités, coopérant à chacune de ces extrémités avec un écrou. On pourrait également concevoir un organe de serrage différent, coopérant respectivement avec les deux extrémités de serrage et pouvant être actionné pour les déplacer l'une de l'autre pour réaliser un serrage du collier par d'autres moyens de serrage que le vissage.

On voit notamment sur les figures 1 et 3 que l'organe de serrage 14 est retenu par rapport à la première extrémité de serrage 12A via un ressort 24 et une pièce de liaison 26. On comprend que, pour le serrage de la ceinture autour de l'objet à serrer, le serrage de l'organe de serrage tend à déplacer la pièce de liaison 26 par rapport à la première extrémité de serrage 12A à l'encontre de l'effet de rappel élastique du ressort 24. Il s'agit en l'espèce d'un ressort de compression qui est disposé entre une face externe 12A" de la première extrémité de serrage et une face interne 26A d'une paroi de fond 27C de la pièce de liaison 26 qui est opposée à la face externe 12A".

En l'espèce la pièce de liaison 26 forme une partie de cage dans laquelle le ressort 24 est disposé. En particulier, le ressort est maintenu entre la paroi de fond 27C précitée et des parois latérales 27A et 27B de cette pièce de liaison.

On voit d'ailleurs sur la figure 3 que la pièce de liaison 26 comprend une portion de centrage du ressort 24. En l'espèce, le ressort 24 est un ressort hélicoïdal et la paroi de fond 27C de la pièce de liaison 26 présente une portion centrale en avancée 26A' qui est configurée pour être engagée dans l'extrémité 24A du ressort et forme ainsi une portion de centrage du ressort. Un espace permettant de loger les spires du ressort est ménagé entre la portion en avancée 26A' et les faces internes, c'est-à-dire tournées l'une vers l'autre, des parois latérales 27A et 27B.

La cage formée par la pièce de liaison présente une surface externe de retenue qui, en l'espèce, est formée sur la face extérieure 26A" de la portion en avancée 26A', cette face extérieure celle qui est opposée au ressort 24. La paroi de fond 27C présente un perçage 26' permettant le passage du fût 14C de la tige de serrage 14. La face externe de la paroi de fond 27C forme, autour du perçage 26', un moyen de retenue de la tête 14A de la tige 14 ou d'un écrou coopérant avec cette tige.

La pièce de liaison 26 comporte également un organe anti-rotation permettant d'éviter la rotation de la tige de serrage 14 par rapport à cette pièce. En l'espèce, l'organe anti-rotation est formé par une partie 27C' de la surface externe de retenue. En effet, la tête de serrage 14A peut présenter un ou plusieurs méplats 14A', par exemple en étant hexagonale ou carrée. De son côté, la surface externe de retenue 26A" peut présenter des bords 27C' formant des méplats coopérant avec le ou les méplats de la tête de la tige de serrage pour bloquer cette dernière en rotation. En l'occurrence, la portion en avancée 26A' de la paroi de fond 27C présente des éléments de paroi axiaux 27C' qui s'étendent parallèlement à l'axe de la tige de serrage 14, vers la première extrémité de serrage 12A. Les faces externes de ces éléments de paroi coopèrent avec les méplats de la tête de la tige de serrage pour la caler en rotation. Selon les dimensions du ressort et celles de la tige de serrage, la portion en avancée peut avoir une forme lui conférant, dans une première direction, des dimensions adaptées à celles du ressort pour que la portion en avancée soit engagée dans le ressort en le calant transversalement et lui conférant, dans une deuxième direction et sur sa face opposée, des dimensions adaptées à caler la tête de la tige de serrage. Par exemple, la portion en avancée peut être rectangulaire et avoir une longueur, sur sa face tournée vers le ressort, adaptée aux dimensions transversales internes du ressort et avoir une largeur, sur sa face interne recevant la tête de la tige de serrage, qui cale cette dernière en rotation.

De manière alternative ou complémentaire, on peut faire en sorte que la tête 14A de la tige de serrage soit engagée à force dans le puits formé par la portion en avancée 26A', du côté opposé à la première extrémité de serrage 12A, ce qui permet non seulement de la caler en rotation, mais également de la retenir axialement lors de la mise en place du ressort et du montage de la pièce de liaison et du ressort sur la première extrémité de serrage 12A.

Globalement, la pièce de liaison 26 présente en l'espèce une forme en U présentant deux branches formant les parois latérales 27A et 27B précédemment citées, et un fond formant la paroi de fond 27C. En l'espèce, cette paroi de fond présente elle-même une portion en avancée 26A' comme indiqué. La largeur de la pièce de liaison, mesurée transversalement à la direction axiale de la tige de serrage, est plus faible dans la région de la portion en avancée 26A' que dans les branches 27A et 27B, et dans la portion de la paroi de fond 27C qui n'est pas en avancée. Ceci permet à la portion en avancée 26A' de venir se loger à l'intérieur des spires du ressort 24, tout en faisant en sorte que le ressort soit protégé latéralement sur l'intégralité ou la quasi intégralité de sa largeur, par les parois latérales 27A et 27B formant les branches du U.

Du fait de sa forme en U, la pièce de liaison 26 peut être enfichée sur la première extrémité de serrage 12A de sorte que cette première extrémité de serrage passe entre les deux branches 27A et 27B.

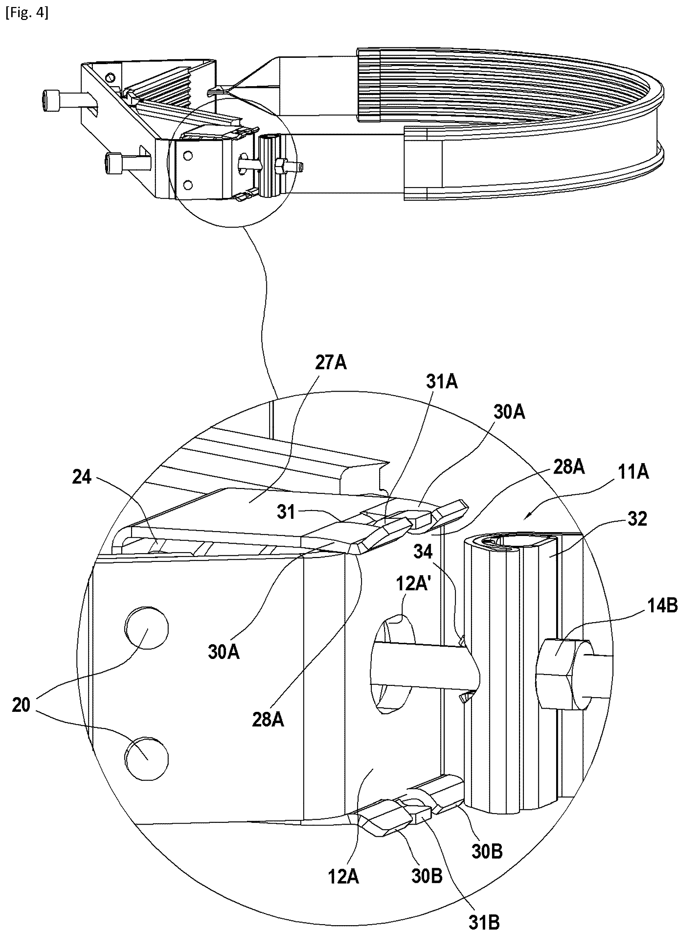

La figure 4 montre la pièce de liaison dans une position d'attente dans laquelle elle maintient le ressort 24 vis-à-vis de la première extrémité de serrage 12A, avant le serrage. Ainsi, dans cette situation, la ceinture 10 peut être disposée autour de l'objet à serrer en ayant totalement écarté la tige de serrage 14 du reste du dispositif, l'ensemble formé par la première extrémité 12A de la ceinture, la pièce de liaison 26 et le ressort 24 formant un tout homogène qui reste assemblé lors des diverses manipulations effectuées. Cependant, ce prémontage du ressort ne s'oppose pas, ensuite, au déplacement de la pièce de liaison par rapport à la première extrémité de la ceinture lors du serrage.

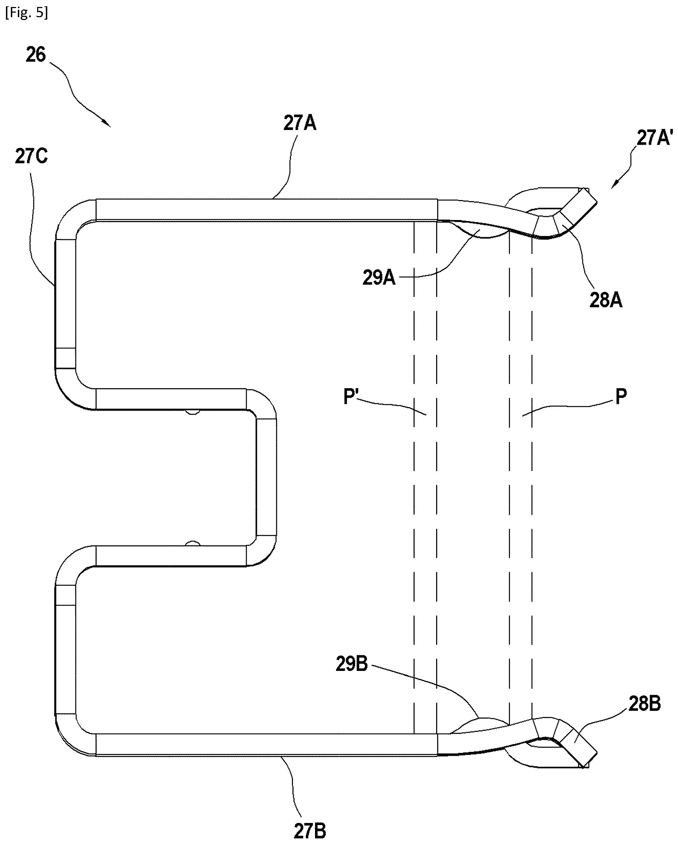

Pour maintenir la pièce de liaison 26 en position d'attente, le dispositif peut comprendre un organe de maintien en position d'attente, en particulier un organe de clipsage d'attente. Cet organe permet de clipser ou de pré-accrocher la pièce de liaison sur la première extrémité de serrage 12A. En l'occurrence, l'organe de maintien de la pièce de liaison en position d'attente est formé sur les parois latérales 27A et 27B de la pièce de liaison. On voit en effet, en regardant en particulier les figures 4 et 5, que, du côté opposé à la paroi de fond 27C, ces parois latérales présentent des saillies internes d'accrochage, des saillies internes portées par l'une des parois, par exemple la paroi 27A, se projetant vers l'autre paroi, par exemple la paroi 27B. Ici, "interne" signifie du côté intérieur du U formé par la pièce de liaison.

Ainsi, la paroi latérale 27A comprend une première saillie interne 28A et une deuxième saillie interne 29A décalées l'une de l'autre dans la direction axiale, qui est ici la direction de l'axe du ressort et de l'axe de la tige de serrage. En l'espèce, la saillie interne 28A est plus proche de l'extrémité libre 27A' de la paroi latérale opposée au fond 27C que la saillie 29A. En l'espèce, ces saillies sont formées par des ondulations en saille vers l'intérieur de la pièce de serrage. En l'espèce, comme on le voit sur la figure 4, les portions terminales des parois latérales 27A et 27B opposées au fond 27C présentent des découpes axiales entre lesquelles sont ainsi ménagées des pattes qui présentent des ondulations vers l'intérieur formant les saillies 28A et 29A précitées. Par exemple, la portion d'extrémité libre de la paroi latérale 27A présente deux pattes marginales 30A entre lesquelles est réalisée une patte intermédiaire 31A. Cette patte intermédiaire 31A est seulement séparée des pattes marginales 30A par des découpes longitudinales 31. Les pattes marginales 30A présentent des ondulations vers l'intérieur qui forment les saillies 28A et, à leurs extrémités libres, sont recourbées vers l'extérieur. La patte intermédiaire 31A présente également une ondulation vers l'intérieur 29A et est également courbée vers l'extérieur entre cette ondulation et son extrémité libre. Les sommets des ondulations 28A sont disposés sur une même ligne transversale, perpendiculaire à la direction de l'axe du ressort et sont plus proches de l'extrémité libre de la paroi latérale 27A que celui de l'ondulation 29A. La configuration de la pièce de liaison 26 est symétrique, et l'on voit que l'autre paroi latérale 27B présente des saillies 28B et 29B formant des ondulations, analogues aux ondulations 28A et 29A, ces ondulations 28B et 29B étant formées dans des pattes externes 30B et une patte intermédiaire 31B qui s'étend entre ces pattes externes 30B. Lors de l'enfichage de la pièce de liaison sur la première extrémité de serrage 12A, les ondulations 28A et 28B forment des points durs qui doivent être dépassés pour réaliser l'enfichage. Une fois ces points durs dépassés, la première extrémité de serrage 12A formée ici par une portion de bande, occupe la position P indiquée sur la figure 5. On comprend que, dans cette situation, la pièce de liaison 26 est retenue sur cette première extrémité 12A vis-à-vis d'un déplacement axial, c'est-à-dire selon l'axe du ressort 24, par sa localisation entre, d'une part, les ondulations 28A et 28B et, d'autre part, les ondulations 29A et 29B. On obtient ainsi une position stable d'attente dans laquelle la pièce de liaison 26 peut être maintenue. Sur la figure 5, pour faciliter la visibilité, on n'a pas représenté le ressort 24, mais il va de soi qu'il est alors maintenu dans la pièce de liaison 26, en particulier en étant alors en butée contre, d'une part, la face externe 12A" de la première extrémité de serrage 12A (voir figure 3) et, d'autre part, la face interne 26A de la paroi de fond 27C de la pièce de serrage 26.

Comme indiqué, la position d'attente permet de maintenir le ressort 24 à la première extrémité de serrage 12A. Elle permet encore de manipuler le dispositif de serrage pour le disposer autour de l'objet à serrer, avant même que l'organe de serrage ne soit en place et, en tout cas, avant qu'il ne soit serré. Lors de ces manipulations, l'ensemble formé par la pièce de liaison 26 et le ressort 24 reste prémonté à la première extrémité de serrage 12A.

En l'espèce, la pièce de liaison 26 est en outre apte à occuper une position de seuil de serrage qui est atteinte par le serrage de l'organe de serrage. Ainsi, la pièce de liaison est dans sa position d'attente lors du montage et de la fermeture de la ceinture autour de l'objet à serrer, puis, lors du serrage, elle passe de sa position d'attente à sa position de seuil de serrage sous l'effet du serrage de l'organe de serrage.

Le dispositif peut comprendre un repère de seuil pour constater que la position de seuil de serrage est atteinte. En l'espèce, ce repère de seuil est formé par la ou les ondulations 29A et 29B précédemment évoquées, qui forment des points durs lors du serrage et qui doivent être dépassées pour que l'on parvienne en phase de serrage effective. Ici, "dépassé" signifie que, lors du serrage, la pièce de liaison 26 se déplace sur la première extrémité de serrage 12A de sorte que cette première extrémité parvienne davantage vers sa paroi de fond 27C par rapport aux ondulations 29A et 29B. Ces ondulations 29A et 29B forment des organes de clipsage de seuil, puisque leur dépassement lors du serrage s'apparente à un clipsage ou encliquetage. Ce repère de seuil peut être visible, par le fait que, lorsqu'il est franchi, les pattes intermédiaires 31A et 31B sur lesquelles sont formées les ondulations 29A et 29B ont tendance à s'écarter l'une de l'autre. Ceci constitue un repère visuel pour le monteur, qui peut par ailleurs aisément visualiser le fait que la première extrémité 12A a effectivement dépassé les ondulations 29A et 29B.

A partir du moment où le repère de seuil a été dépassé, le serrage peut être réalisé jusqu'au niveau de serrage souhaité et en tenant compte de la raideur du ressort et de son niveau de sollicitation (taux de compression pour un ressort de compression comme dans l'exemple représenté). Ce repère de seuil, notamment lorsqu'il prend la forme d'un repère visuel, est un moyen simple et fiable de s'assurer que le niveau de serrage souhaité est atteint. Il s'agit d'un repère objectif étant noté qu'il est parfois peu précis de se baser sur le couple de serrage atteint par l'outil qui sert au serrage car la mesure de ce couple peut être faussée par des paramètres étrangers au niveau réel de serrage obtenu, tels que d'éventuels frottements de la tige de serrage contre les pièces avec lesquelles elle coopère et le coefficient de frottement des éléments de vissage (filetages de la tige et de l'écrou). Lee repère de seuil peut également être disposé de sorte que l'on considère que, dès lors qu'il est dépassé, la valeur de serrage souhaitée a été obtenue.

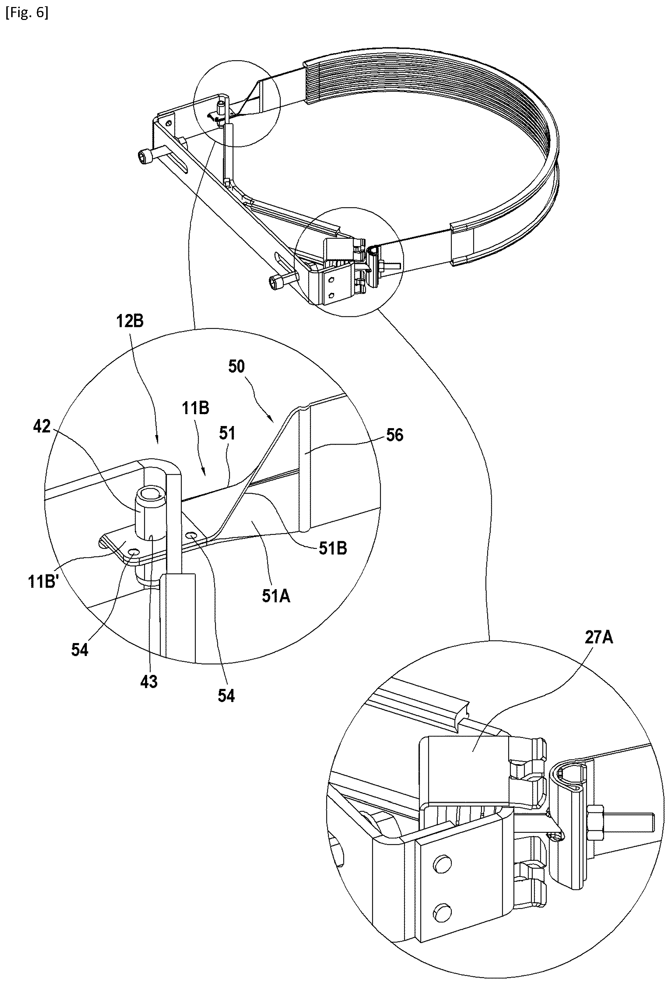

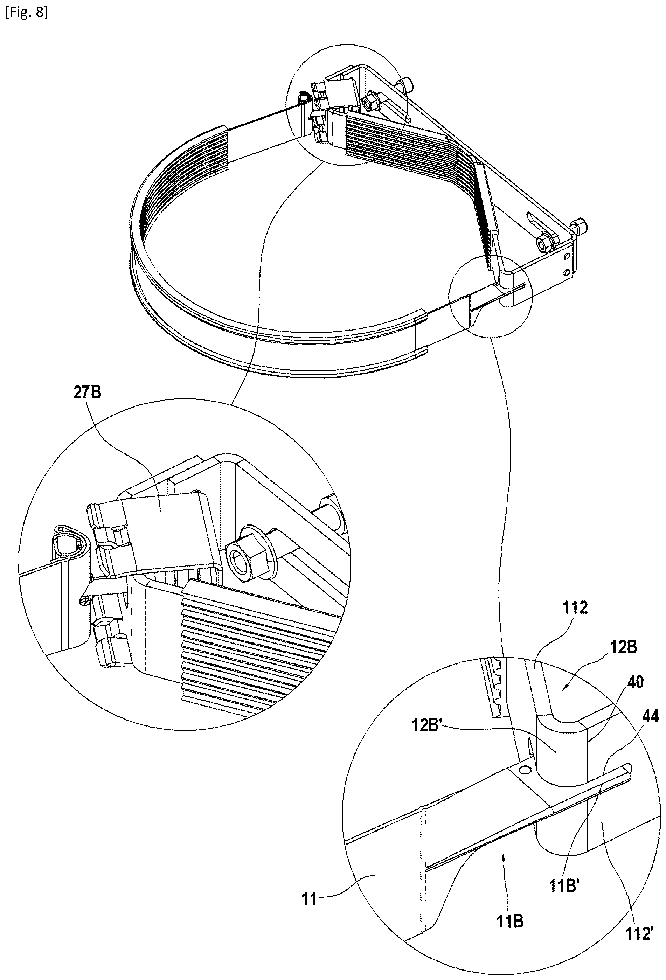

Une fois le repère de seuil dépassé et le dispositif de serrage ainsi serré autour de l'objet, ce dispositif peut accompagner les éventuelles dilatations de l'objet qu'il serre car ces dilatations provoquent un déplacement de la pièce de liaison 26 par rapport à la première extrémité de serrage 12A, à l'encontre de l'effet de rappel élastique du ressort 24. Le seuil de serrage est dépassé sur les figures 6 et 8, sur lesquelles la première extrémité de serrage occupe la position P' indiquée sur la figure 4.

Par exemple, lorsque cet objet est un réservoir hydrogène, le dispositif de serrage peut être mis en place alors que ce réservoir est vide ou pratiquement vide, puis ce réservoir peut être rempli jusqu'à la position nominale souhaitée, qui comme indiqué précédemment, peut atteindre plusieurs centaines de bars, à l'occasion de quoi il se dilate et sollicite alors le rappel élastique de serrage permis par la présence du ressort 24.

En variante, on peut prévoir que la pièce de liaison 26 soit apte à occuper une position de limite de serrage maximale. Ceci permet d'éviter de solliciter les différents éléments du dispositif de serrage, et en particulier le ressort 24, au-delà de leur limite d'élasticité. En d'autres termes, ceci permet d'éviter des déformations plastiques qui nuiraient à la pérennité du serrage.

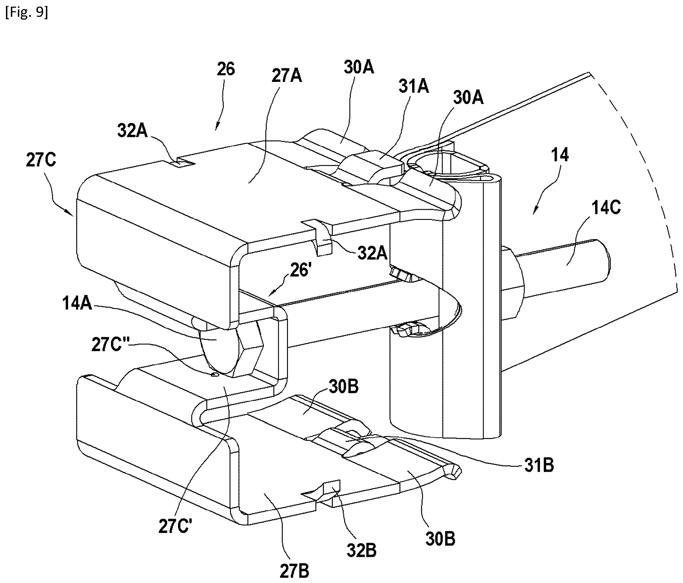

La variante de la figure 9 illustre cette possibilité. On voit sur cette figure que la pièce de liaison 26 comprend, en plus des différents éléments ou composants précédemment cités, des butées de serrage maximal 32A et 32B. En l'espèce, ces butées de serrage maximal sont formées par des saillies vers l'intérieur des parois latérales 27A et 27B. En l'espèce, il s'agit de languettes découpées dans les bords longitudinaux de ces parois latérales et repliées vers l'intérieur (l'intérieur s'entendant ici de l'intérieur du U formé par la pièce de serrage). Etant formées sur les bords des parois latérales, ces saillies internes s'interfèrent pas avec le ressort 24. En revanche, elles sont capables de venir en butée contre la face externe de la première extrémité de serrage 12A de la ceinture en position de serrage maximal.

Sur la figure 9, on constate également la présence, sur l'élément de paroi latérale 27C' de la portion en avancée 26A' de la pièce de liaison, d'un élément anti-retour 27C" permettant, une fois que la tête 14A de la tige de serrage 14 est parvenue en position, au fond de la face externe de la portion en avancée, de s'opposer à une extraction de la vis. En quelque sorte, cet élément anti-retour 27C" forme un organe de clipsage qui doit être dépassé pour que la tête de la vis parvienne en position. Cet élément anti-retour pourrait bien entendu être prévu sur les autres figures.

En revenant aux figures précédentes, en particulier aux figures 3 et 4, on constate que le perçage 12A' de la première extrémité de serrage 12A traversé par la tige de serrage peut être oblong, de manière à permettre le débattement de cette tige par rapport à la première extrémité de serrage, lors du serrage du dispositif de serrage. Les différents éléments constitutifs de la ceinture peuvent être réalisés à partir de bandes métalliques plates. En particulier, dans la région dans laquelle elle coopère avec la pièce de liaison 26, la première extrémité de serrage 12A forme une bande plate qui, une fois la pièce de liaison pré-accrochée sur elle, constitue un élément de paroi opposé à la paroi de fond 27C de cette pièce de liaison.

La deuxième extrémité de serrage de la ceinture 11A présente ainsi qu'on l'a dit un perçage 11A' permettant le passage de la tige de serrage. Ce perçage 11A' peut également être oblong pour permettre le débattement de la tige par rapport à cette deuxième extrémité. En l'espèce, la portion de ceinture 11 est formée dans une bande, en particulier une bande métallique et cette deuxième extrémité de serrage 11A peut être localement renforcée. Pour ce faire, une portion d'extrémité libre de la bande dans laquelle est constituée la partie de ceinture 11 est repliée sur elle-même et est rabattue de manière à doter l'extrémité 11A d'une double épaisseur dans laquelle est pratiquée l'ouverture 11A'.

Par ailleurs, dans cette zone, cette extrémité 11A forme une oreille concave permettant de loger une entretoise 32 à l'arrière de laquelle est situé l'écrou 14B. Cette entretoise présente un passage 32A pouvant être traversé par la tige de serrage 14. L'entretoise peut être formée à partir d'une bande de métal enroulée sur elle-même et découpée localement pour former le passage 32A. En l'occurrence, l'entretoise 32 présente une forme externe de berceau avec une convexité épousant la concavité formée sur la face externe de l'extrémité de serrage 11A. On peut prévoir des moyens de retenue et de calage en rotation de l'entretoise par rapport à cette première extrémité. En l'espèce, le bord du passage 32A présente des pattes 34 repliées de manière à se projeter au-delà de la face avant de l'entretoise, tournée vers la face externe de l'extrémité de serrage 11A. Ces pattes 34 viennent ainsi se placer dans l'ouverture 11A' de manière à coopérer avec le bord de cette ouverture pour caler l'entretoise par rapport à elles. L'entretoise 32 peut être creuse, en étant formée dans une bande enroulée sur elle-même. En l'occurrence, le plan de joint des extrémités de cette bande est formé sur la face avant de l'entretoise, les pattes 34 sont réalisées sur les bords de ce plan de joint. L'ouverture avant du passage 32A formé dans la face avant de l'entretoise est donc formée par une découpe 33 dans les bords de la bande dans laquelle est formée l'entretoise. En revanche, l'ouverture arrière du passage 32A située dans la face arrière de l'entretoise peut être formée par une découpe 33' circulaire ou ovalisée.

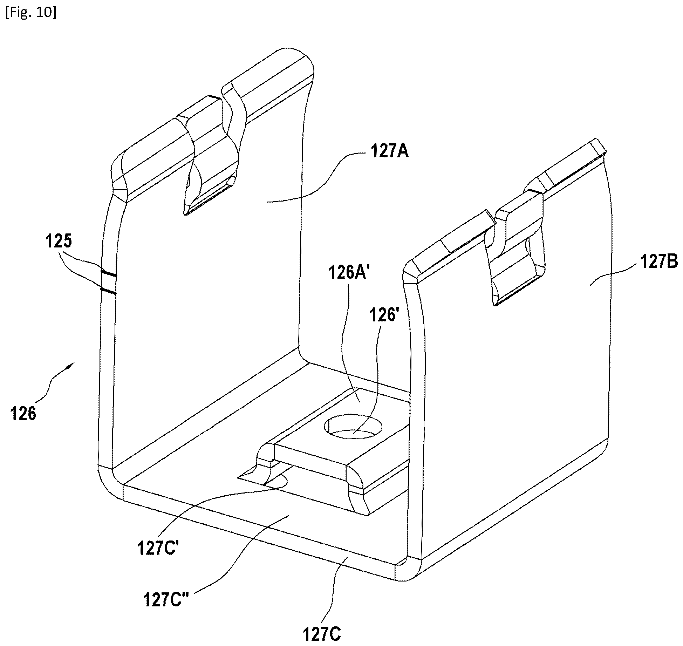

On décrit maintenant la figure 10, qui illustre une variante de réalisation pour la pièce de liaison. Sur cette figure, on utilise les mêmes références que sur les figures précédentes, augmentées de 100 pour désigner la pièce de liaison et ses différents éléments.

La pièce de liaison 126 présente également une forme en U, avec une paroi de fond 127C et deux parois latérales, 127A et 127B. Comme la pièce de liaison 26, elle forme une partie de cage pour le ressort. La pièce de liaison 126 se distingue de la pièce de liaison 26 par deux aspects, à savoir, d'une part, une conformation légèrement différente de sa paroi de fond et, d'autre part, la présence de repères visuels particuliers pour le repère de seuil.

S'agissant de la paroi de fond 127C, la portion de centrage du ressort est formée par une portion en avancée 126A' qui présente un perçage 126' pour la tige de serrage. En l'espèce, cette portion en avancée 126A' est formée dans une portion centrale de la paroi de fond 127C tout autour de laquelle le reste de la paroi de fond subsiste. Ainsi, la partie de la paroi de fond qui n'est pas en avancée est présente non seulement entre la portion en avancée 126A' et les parois latérales 127A, 127B comme dans l'exemple des figures précédentes, mais également sur les côtés de la portion en avancée, par des portions marginales 127C" qui s'étendent, de part et d'autre de la portion en avancée 126A', de l'une à l'autre des parois latérales 127A, 127B. Ici, la portion en avancée est séparée de ces portions marginales 127C" par des découpes dans la paroi de fond et est repoussée, par exemple par emboutissage, pour être en avancée. Les bords de la découpe ou les éléments de paroi axiaux 127C' de la surface externe de la portion en avancée 126A' peuvent servir d'organes anti-rotation pour la tige de serrage, en particulier lorsque, comme dans l'exemple représenté, ces bords ou ces éléments de paroi présentent des méplats.

Bien entendu, il est possible de réaliser la portion en avancée par un embouti sans découpes sur ses côtés mais percé en son fond pour permettre le passage de la tige de serrage. La géométrie de cet embouti ou ses dimensions peuvent alors permettre de réaliser une fonction anti-rotation de la tige de serrage. Par exemple, la surface externe de l'embouti peut présenter un ou plusieurs méplats ou bien définir localement des dimensions transversales nécessitant un engagement à force de la tête de la tige de serrage dans l'embouti.

S'agissant des repères visuels, la pièce de liaison 126 présente au moins un trait, entaille ou analogue, présent sur au moins l'une des parois latérales 127A,127B, en l'espèce sur sa tranche, ce trait, entaille ou analogue formant un repère visuel. L'opérateur vérifiant le serrage de la ceinture peut ainsi vérifier que la première extrémité de serrage 12A est bien parvenue au niveau du ou des repères visuels. On peut par exemple prévoir deux repères visuels 125 écartés d'une distance correspondant à l'épaisseur de bande de la première extrémité de serrage. Bien entendu, de tels repères visuels peuvent être prévus sur la pièce de liaison 26 précédemment décrite.

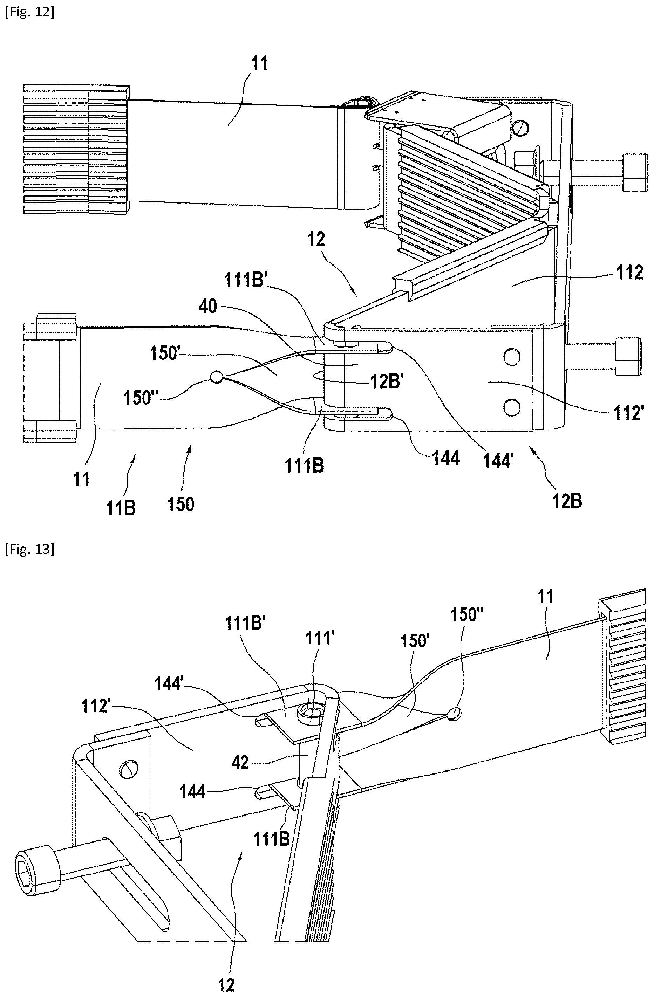

La figure 12 montre une autre variante qui se rapporte d'une part au seuil de serrage et, d'autre part, au repère visuel de ce seuil.

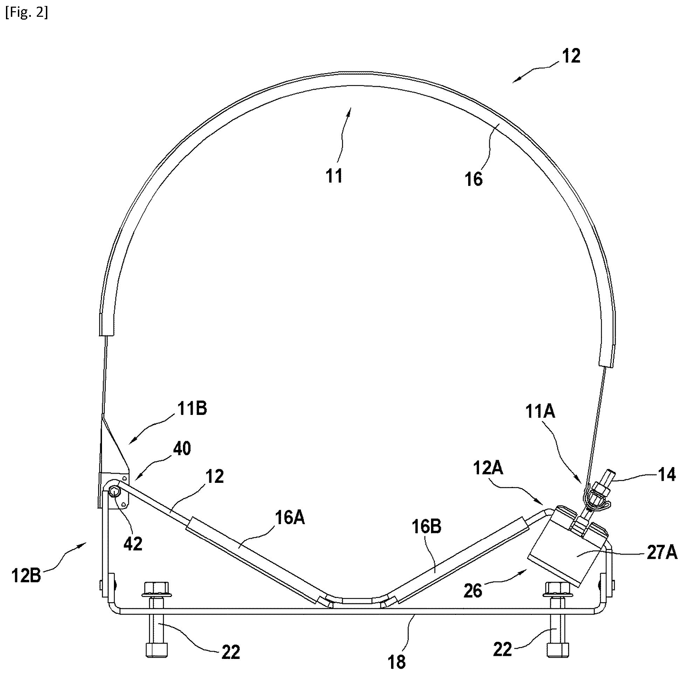

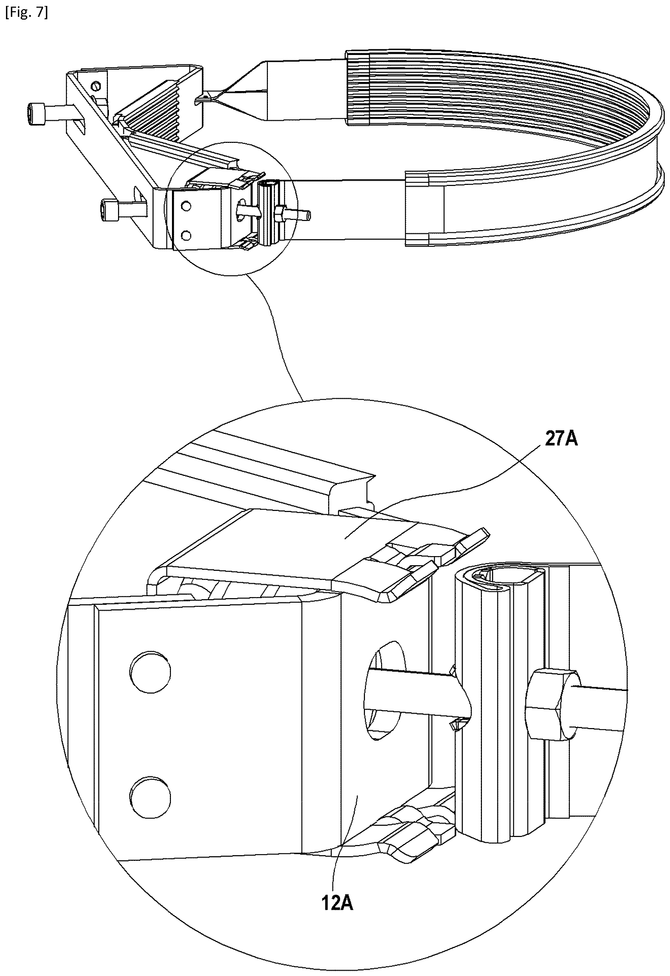

Sur la figure 12, on utilise les mêmes références que sur les figures 1 à 9, augmentées de 200 pour désigner les éléments de la pièce de liaison. Dans un souci de simplification, la figure 12 ne montre que l'une des parois latérales 227A de la pièce de liaison. Les deux parois latérales de la pièce de liaison sont analogues entre elles et sa paroi de fond peut être analogue à celle de la pièce de liaison 26 ou à celle de la pièce de liaison 126.

Sur les figures précédentes, deux saillies internes 29A et 29B, en l'espèce formées par des ondulations, sont prévues sur la paroi latérale 27A et la pièce de liaison est maintenue en position d'attente à la première extrémité de serrage 12A par le positionnement de cette première extrémité entre ces deux saillies, puis le seuil de serrage est atteint lorsque le positionnement de cette première extrémité dépasse la saillie 29A vers la paroi de fond de la pièce de liaison. Ici, la position de seuil de serrage est donc très proche de la position d'attente.

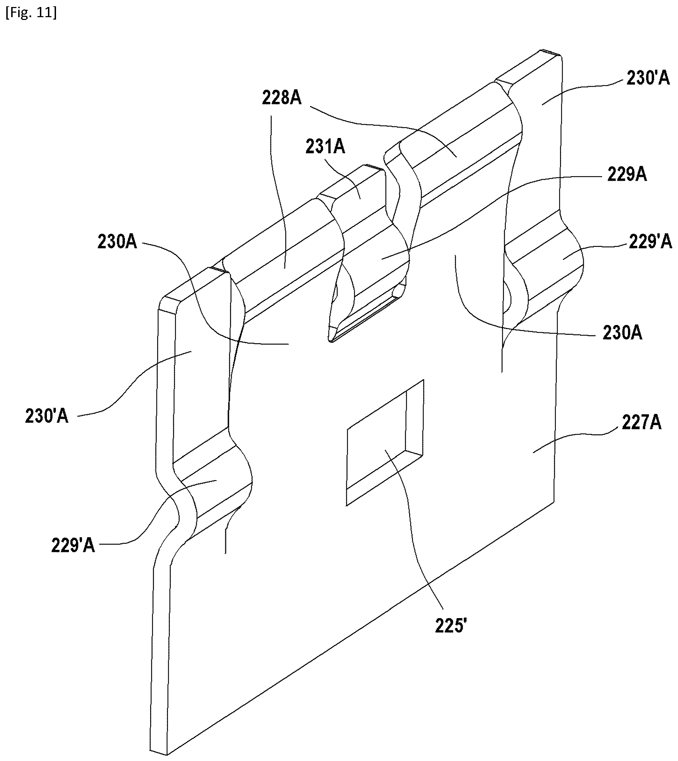

Il peut arriver qu'il soit nécessaire d'avoir une amplitude de serrage plus importante à partir de la position prémontée, ce qui implique que l'amplitude du déplacement de la pièce de liaison par rapport à la première extrémité de serrage soit plus grande. Ainsi, sur la figure 11, c'est une troisième saillie 229'A qui définit le seuil de serrage. La paroi latérale 227A présente donc deux saillies 228A et 229A respectivement analogues aux saillies 28A et 29A et positionnées de manière à définir entre elles la position de retenue de la pièce de liaison, et une troisième saillie 229'A, située plus près du fond (de la paroi de retenue) que la deuxième saillie 229A, et c'est lorsque, du fait du déplacement de la pièce de liaison sous l'effet du serrage, la première extrémité de serrage 12A dépasse cette troisième saillie, que le seuil de serrage est atteint. Ici, les saillies 228A, 229A et 229'A sont formées par des ondulations vers l'intérieur de la pièce de liaison, comme les saillies de l'exemple précédent. En l'espèce, ces saillies sont présentes sur des pattes distinctes et l'on a représenté deux pattes marginales 230'A pourvues chacune d'une ondulation 229'A, deux pattes intermédiaires 230A pourvues chacune d'une ondulation 228A et une patte centrale 231A pourvue de l'ondulation 229A. On pourrait cependant prévoir un nombre de pattes différent et, par exemple, réaliser les ondulations 229A et 229'A ou les ondulations 228A et 229'A sur la même patte.

Par ailleurs, la figure 12 montre une autre variante de repère visuel de seuil de serrage. Il s'agit en l'espèce d'une fenêtre 225' pratiquée dans la paroi latérale 227A et permettant à l'opérateur de vérifier depuis l'extérieur de la pièce de liaison, que la première extrémité de serrage 12A est bien parvenue dans la position de seuil de serrage, en l'espèce définie par le passage derrière les ondulations 229'A.

Bien entendu, la variante qui vient d'être décrite en référence à la figure 12 peut être mise en œuvre pour la pièce de liaison 26 ou 126.

On décrit maintenant un autre aspect de l'exposé, qui se rapporte à l'articulation entre les deux parties de ceinture 11 et 12. La deuxième extrémité 12B de la deuxième partie de ceinture 12 présente une zone de retenue 40 par rapport à laquelle la deuxième extrémité 11B de la première partie de ceinture est retenue à pivotement par un axe de pivotement 42.

Ceci est particulièrement visible sur les figures 1, 2, 6 et 8. En l'espèce, la zone de retenue 40 comprend une fente 44 dans laquelle est insérée la deuxième extrémité 11B de la première partie de ceinture 11. En l'occurrence, cette zone de retenue présente également un pliage et ménage donc, sur la face externe de la deuxième partie de ceinture 12, un palier pour la rotation de l'axe de pivotement 42. On distingue ainsi de part et d'autre de la zone pliée 12B' deux portions de la deuxième extrémité de la deuxième partie de ceinture, ces deux portions étant respectivement identifiées 112 et 112' sur la figure 8. En l'occurrence, du fait du pliage en 12B', ces deux portions sont inclinées l'une par rapport à l'autre en formant entre elles un angle de l'ordre de 60°. Cet angle pourrait être différent, mais il est de préférence inférieur à 90°, par exemple de l'ordre de 40° à 70°. La fente 44 s'étend dans ces deux portions 112 et 112' de manière à permettre le pivotement libre de la deuxième extrémité 11B de la première partie de ceinture 11 par rapport à elle. En effet, selon l'angle de pivotement, la portion d'extrémité libre 11B' de cette première extrémité ressort de la fente, dans l'une ou l'autre des portions 112 et 112'.

La fente 44 dans laquelle est insérée l'extrémité 11B de la première partie de ceinture 11 est orientée perpendiculairement à l'orientation générale de la première partie de ceinture 11 dans sa partie courante (la partie courante étant celle qui peut venir en contact de serrage avec l'objet à serrer). En effet, la direction de la largeur de cette fente, dans laquelle sa plus faible dimension est constatée, est transversale par rapport à l'orientation générale des portions de bande qui constituent les première et deuxième parties de ceinture.

La première partie de ceinture 11 présente une zone de torsion 50 (voir figure 6) amenant la deuxième extrémité 11B de la première partie de ceinture 11 sensiblement à angle droit par rapport à une partie courante de cette première partie de ceinture. En d'autres termes, les portions de bande formant la première partie de ceinture sont orientées sensiblement à angle droit l'une par rapport à l'autre, de part et d'autre de la zone de torsion 50. L'axe de pivotement 42 est quant à lui perpendiculaire par rapport à la deuxième extrémité 11B de la première partie de ceinture qui est insérée dans la fente 44. Comme on le voit notamment sur la figure 6, l'axe de pivotement 42 est engagé dans un perçage 43 de la deuxième extrémité 11B de la première partie de ceinture, ce perçage étant pratiqué dans la portion d'extrémité libre 11B' qui est située de l'autre côté de la zone de torsion 50 par rapport à la deuxième extrémité 12B de la deuxième partie de ceinture 12.

En l'espèce, la deuxième extrémité 11B de la première partie de ceinture présente un pli longitudinal 51 selon lequel deux moitiés de bande 51A et 51B de la première partie de ceinture 11 sont ramenées l'une contre l'autre. Ce pli 51 s'étend à partir de la zone de torsion 50 jusqu'à l'extrémité libre de la deuxième extrémité 11B de la première partie de ceinture 11. Ainsi, dans sa zone insérée dans la fente 44, cette extrémité 11B présente une double épaisseur formée par les portions de bande 51A et 51B ramenées l'une contre l'autre. La résistance mécanique est ainsi localement augmentée, notamment pour la retenue de l'axe 42 dans le perçage 43 précité.

Comme on le voit sur la figure 6, on peut prévoir de retenir ces deux moitiés de bande 51A et 51B plaquées l'une contre l'autre par des moyens de retenue tels que de la soudure ou du clinchage. Par exemple, des points de soudure ou de clinchage 54 sont représentés sur la figure 6 en s'étendant de part et d'autre de la fente 44 une fois que la portion d'extrémité 11B' est insérée dans cette fente 44. Pour délimiter la zone de torsion 50 et éviter que, sous l'effet des efforts de tension de serrage, cette zone de torsion ne se propage dans la partie courante de la première partie de ceinture 11, cette dernière peut présenter un bossage 56 situé de l'autre côté de la zone de torsion 50 par rapport à sa deuxième extrémité 11B. En quelque sorte, ce bossage 56 forme un arrêt de la torsion. Il s'étend en l'espèce transversalement, de part en part sur la largeur de la bande dans laquelle est formée la première partie de ceinture 11. Cependant, le bossage pourrait être plus localisé et simplement interférer avec l'extrémité du pli 51 opposé à l'extrémité libre de la première partie de ceinture. L'axe de pivotement 42 peut être engagé à force dans l'ouverture 43 de manière à rester en position dans cette ouverture.

Bien entendu, cette articulation peut être mise en œuvre indépendamment des aspects qui ont été décrits concernant les premières extrémités 11A et 12A de la ceinture, ayant trait en particulier à la pièce de liaison 26 et au ressort 24. On relève que l'articulation ainsi réalisée est particulièrement résistante mécaniquement. Elle est située dans une région de la ceinture qui n'a pas vocation à être directement au contact de l'objet serré par cette ceinture, les zones de contact étant en l'espèce définies par les gaines 16, 16A et 16B qui ont été décrites. Ainsi, la zone de torsion ne présente aucun impact négatif sur la qualité du serrage et ne risque pas d'endommager l'objet serré.

Les figures 12 et 13 montrent une variante pour l'articulation entre les deux parties de ceinture 11 et 12. Ici, la zone de retenue 40 de la deuxième extrémité 12B de la deuxième partie de ceinture 12 comprend deux fentes 144 et 144' qui s'étendent dans les portions de 112 et 112' de la zone pliée 12B', et la deuxième extrémité 11B de la première partie de ceinture 11 présente deux pattes d'extrémité parallèles 111B et 111B' respectivement insérées dans les fentes.

Les fentes 144 et 144' sont parallèles entre elles et sont orientées perpendiculairement à l'orientation générale de la première partie de ceinture 11 dans sa partie courante.

La première partie de ceinture 11 présente une zone de torsion 150 et une découpe longitudinale 150'. La découpe 150' sépare la portion d'extrémité de l'extrémité 11B en les deux pattes 111B et 111B'. Cette découpe 150' s'étend depuis l'extrémité libre de l'extrémité 11B jusqu'à un point d'arrêt 150". Ce point d'arrêt peut avoir une conformation visant à éviter la propagation de la découpe 150' sous l'effet de la tension de serrage, cette conformation étant par exemple une petite découpe circulaire et/ou un emboutissage ou un écrouissage local.

La zone de torsion 150 est formée entre le point d'arrêt 150" et l'extrémité libre de l'extrémité 11B et comprend deux torsions respectivement réalisées sur chacune des pattes 111B et 111B' pour amener chacune de ces pattes sensiblement à angle droit par rapport à la partie courante de la première partie de ceinture 11. L'axe de pivotement 42 est quant à lui perpendiculaire aux extrémités des pattes 111B et 111B' engagées dans les fentes 144 et 144' et est engagé dans des perçages de ces extrémités.

On voit sur la figure 13 que ces perçages peuvent présenter des collets 111' formés par les bords des perçages des pattes 111B et 111B' repoussés latéralement, c'est-à-dire parallèlement à l'axe de pivotement 42, par exemple vers l'extérieur. Ces collets augmentent localement la résistance mécanique aux efforts.

Un collet similaire peut également être présent sur le bord du perçage 43 de la figure 6. Cette variante pour l'articulation peut également être mise en œuvre indépendamment des aspects qui ont été décrits concernant les premières extrémités 11A et 12A de la ceinture, ayant trait en particulier à la pièce de liaison et au ressort.

## Revendications

1. Dispositif de serrage d'un objet, comprenant une ceinture (10) ayant au moins une première et une deuxième extrémité de serrage (11A, 12A) et un organe de serrage (14) qui relie les deux extrémités de serrage en étant retenu par rapport à ces dernières de sorte que le serrage de l'organe de serrage déplace les première et deuxième extrémités de serrage l'une par rapport à l'autre en serrant la ceinture, l'organe de serrage (14) étant retenu par rapport à au moins la première extrémité de serrage (12A) via un ressort (24) et une pièce de liaison (26), de sorte que le serrage de l'organe de serrage tend à déplacer la pièce de liaison par rapport à la première extrémité de serrage à l'encontre du rappel élastique du ressort, la pièce de liaison (26) étant apte à occuper, par rapport à la première extrémité de serrage (12A), une position d'attente dans laquelle elle maintient le ressort (24) vis-à-vis de la première extrémité de serrage.

2. Dispositif selon la revendication 1, comprenant un organe de maintien de la pièce de liaison en position d'attente (28A, 29A, 28B, 29B), en particulier un organe de clipsage d'attente.

3. Dispositif selon la revendication 1 ou 2, dans lequel la pièce de liaison (26) est apte à occuper une position de seuil de serrage qui est atteinte par le serrage de l'organe de serrage.

4. Dispositif selon la revendication 3, comprenant un repère de seuil (29A, 29B) pour constater que la position de seuil de serrage est atteinte, le repère de seuil comprenant en particulier un organe de clipsage de seuil.

5. Dispositif selon l'une des revendications 1 à 4, dans lequel la pièce de liaison (26) est apte à occuper une position de limite de serrage maximal, le dispositif comprenant optionnellement une butée de serrage maximal (32A, 32B).

6. Dispositif selon l'une des revendications 1 à 5, dans lequel la pièce de liaison (26) forme une partie de cage dans laquelle le ressort (24) est disposé, la pièce de liaison présentant optionnellement une portion (26A') de centrage du ressort (24).

7. Dispositif selon la revendication 6, dans lequel l'organe de serrage (14) comprend une tige de serrage et la partie de cage formée par la pièce de liaison (26) présente une surface de retenue (26A") contre laquelle est retenu un élément de retenue de la tige de serrage, tel qu'une tête (14A) de ladite tige, ladite surface de retenue comprenant optionnellement un organe (27C') anti-rotation de la tige de serrage (14) et étant optionnellement située sur une face externe de la portion (26A') de centrage du ressort (24).

8. Dispositif selon l'une des revendications 1 à 7 prise en combinaison avec la revendication 2, dans lequel la pièce de liaison (26) présente une forme en U présentant deux branches (27A, 27B), la pièce de liaison étant enfichée sur la première extrémité de serrage (12A) de sorte que cette première extrémité de serrage passe entre les deux branches, l'organe de maintien de la pièce de liaison en position d'attente (28A, 29A, 28B, 29B) comprenant au moins une saillie de maintien en saillie sur la face interne d'au moins l'une des deux branches.

9. Dispositif selon l'une des revendications 1 à 8 prise en combinaison avec la revendication 4, dans lequel la pièce de liaison (26) présente une forme en U présentant deux branches (27A, 27B), la pièce de liaison étant enfichée sur la première extrémité de serrage (12A) de sorte que cette première extrémité de serrage passe entre les deux branches, le repère de seuil (29A, 29B) comprenant une saillie de repère en saillie sur la face interne d'au moins l'une des deux branches.

10. Dispositif selon l'une des revendications 1 à 9 prise en combinaison avec la revendication 5, dans lequel la pièce de liaison (26) présente une forme en U présentant deux branches (27A, 27B), la pièce de liaison étant enfichée sur la première extrémité de serrage (12A) de sorte que cette première extrémité de serrage passe entre les deux branches, au moins l'une des deux branches présentant une saillie de butée de serrage maximal (32A, 32B).

11. Dispositif selon l'une des revendications 1 à 10, dans lequel l'organe de serrage comprend une tige de serrage (14) qui est retenue par rapport à la deuxième extrémité de serrage (11A) de la ceinture (10) par un écrou (14B).

12. Dispositif selon l'une des revendications 1 à 11, dans lequel la ceinture (10) comprend une première partie de ceinture (11) dont une première extrémité (11A) forme l'une des première et deuxième extrémités de serrage et une deuxième partie de ceinture (12) dont une première extrémité (12A) forme l'autre des première et deuxième extrémités de serrage, ladite deuxième partie de ceinture formant une partie de fixation configurée pour être fixée sur un support (18).

13. Dispositif selon l'une des revendications 1 à 12, dans lequel la ceinture (10) comprend une première partie de ceinture (11) dont une première extrémité (11A) forme l'une des première et deuxième extrémités de serrage et une deuxième partie de ceinture (12) dont une première extrémité (12A) forme l'autre des première et deuxième extrémités de serrage, les deuxièmes extrémités (11B, 12B) des première et deuxième parties de ceinture étant reliées par une articulation.

14. Dispositif selon la revendication 13, dans lequel la deuxième extrémité (12B) de la deuxième partie de ceinture (12) présente une zone de retenue (40), par rapport à laquelle la deuxième extrémité (11) de la première partie de ceinture (11 )est retenue à pivotement par un axe de pivotement (42), la zone de retenue comprenant en particulier une fente (44;144,144') dans laquelle est insérée la deuxième extrémité (11B) de la première partie de ceinture (11).

15. Dispositif selon la revendication 14, dans lequel la première partie de ceinture (11) présente une zone de torsion (50;150) amenant la deuxième extrémité (11B) de la première partie de ceinture sensiblement à angle droit par rapport à une partie courante de la première partie de ceinture, l'axe de pivotement (42) étant perpendiculaire par rapport à ladite deuxième extrémité de la première partie de ceinture, en particulier en étant engagé dans un perçage (43) de la deuxième extrémité (11B) de la première partie de ceinture (11), ce perçage présentant optionnellement un collet (111').

16. Dispositif selon la revendication 15, dans lequel la deuxième extrémité de la première partie de ceinture présente un pli longitudinal (51) selon lequel deux moitiés de bande (51A, 51B) de la première partie de ceinture (11) sont ramenées l'une contre l'autre, en étant optionnellement retenues plaquées l'une contre l'autre, par exemple par soudure ou clinchage (54).

17. Dispositif selon la revendication 15 ou 16, dans lequel la première partie de ceinture présente un bossage situé de l'autre côté de la zone torsion par rapport à la deuxième extrémité de la première partie de ceinture.

18. Dispositif selon l'une des revendications 14 à 17, dans lequel la deuxième extrémité (11B) de la première partie de ceinture (11) présente deux pattes parallèles (111B,111B') insérées chacune dans une fente (144,144') de la zone de retenue (40).

19. Dispositif selon la revendication 18, dans lequel les deux pattes (111B,111B') sont séparées par une découpe (150') et la deuxième extrémité (11B) de la première partie de ceinture (11) présente une zone de torsion (150) comprenant deux torsions amenant chacune des pattes sensiblement à angle droit par rapport à une partie courante de la première partie de ceinture.

## Patentansprüche

1. Vorrichtung zum Spannen eines Gegenstands, umfassend einen Gurt (10), der mindestens ein erstes und ein zweites Spannende (11A, 12A) und ein Spannglied (14) aufweist, das die zwei Spannenden verbindet, indem es in Bezug auf die letztgenannten gehalten wird, sodass das Spannen des Spannglieds das erste und das zweite Spannende in Bezug aufeinander bewegt, wenn der Gurt gespannt wird, wobei das Spannglied (14) in Bezug auf mindestens das erste Spannende (12A) über eine Feder (24) und ein Verbindungsstück (26) gehalten wird, sodass das Spannen des Spannglieds dazu neigt, das Verbindungsstück in Bezug auf dem ersten Spannende gegen die elastische Rückholung der Feder zu bewegen, wobei das Verbindungsstück (26) geeignet ist, um in Bezug auf das erste Spannende (12A) eine Warteposition einzunehmen, in der es die Feder (24) gegenüber dem ersten Spannende hält.

2. Vorrichtung nach Anspruch 1, umfassend ein Halteglied des Verbindungsstücks in einer Warteposition (28A, 29A, 28B, 29B), insbesondere ein Klammer-Warteglied.

3. Vorrichtung nach Anspruch 1 oder 2, wobei das Verbindungsstück (26) geeignet ist, um eine Spannschwellenposition einzunehmen, die durch das Spannen des Spannglieds erreicht wird.

4. Vorrichtung nach Anspruch 3, umfassend eine Schwellenmarkierung (29A, 29B) zum Feststellen, dass die Spannschwellenposition erreicht ist, die Schwellenmarkierung insbesondere umfassend ein Klammer-Schwellenglied.

5. Vorrichtung nach einem der Ansprüche 1 bis 4, wobei das Verbindungsstück (26) geeignet ist, um eine maximale Spanngrenzposition einzunehmen, die Vorrichtung optional umfassend einen maximalen Spannanschlag (32A, 32B).

6. Vorrichtung nach einem der Ansprüche 1 bis 5, wobei das Verbindungsstück (26) ein Käfigteil bildet, in dem die Feder (24) angeordnet ist, wobei das Verbindungsstück optional einen Abschnitt (26A') zum Zentrieren der Feder (24) aufweist.

7. Vorrichtung nach Anspruch 6, wobei das Spannglied (14) einen Spannstab umfasst und das durch das Verbindungsstück (26) gebildete Käfigteil eine Haltefläche (26A") aufweist, an der ein Halteelement des Spannstabs, wie beispielsweise ein Kopf (14A) des Stabs, gehalten wird, die Haltefläche optional umfassend ein Glied (27C') gegen eine Drehung des Spannstabs (14) und wobei sie sich optional an einer Außenseite des Abschnitts (26A') zum Zentrieren der Feder (24) befindet.

8. Vorrichtung nach einem der Ansprüche 1 bis 7 in Kombination mit Anspruch 2, wobei das Verbindungsstück (26) eine U-Form aufweist, die zwei Schenkel (27A, 27B) aufweist, wobei das Verbindungsstück auf das erste Spannende (12A) gesteckt ist, sodass dieses erste Spannende zwischen den zwei Schenkeln verläuft, das Halteglied des Verbindungsstücks in Warteposition (28A, 29A, 28B, 29B) umfassend mindestens einen Haltevorsprung umfasst, der von der Innenseite von mindestens einem der zwei Schenkel hervorsteht.

9. Vorrichtung nach einem der Ansprüche 1 bis 8 in Kombination mit Anspruch 4, wobei das Verbindungsstück (26) eine U-Form aufweist, die zwei Schenkel (27A, 27B) aufweist, wobei das Verbindungsstück auf das erste Spannende (12A) gesteckt ist, sodass dieses erste Spannende zwischen den zwei Schenkeln verläuft, die Schwellenmarkierung (29A, 29B) umfassend einen Markierungsvorsprung, der von der Innenseite von mindestens einem der zwei Schenkel hervorsteht.

10. Vorrichtung nach einem der Ansprüche 1 bis 9 in Kombination mit Anspruch 5, wobei das Verbindungsstück (26) eine U-Form aufweist, die zwei Schenkel (27A, 27B) aufweist, wobei das Verbindungsstück auf das erste Spannende (12A) gesteckt ist, sodass dieses erste Spannende zwischen den zwei Schenkeln verläuft, mindestens einer der zwei Schenkel einen maximalen Spannanschlagvorsprung (32A, 32B) aufweist.

11. Vorrichtung nach einem der Ansprüche 1 bis 10, wobei das Spannglied einen Spannstab (14) umfasst, der in Bezug auf das zweite Spannende (11A) des Gurts (10) durch eine Mutter (14B) gehalten wird.

12. Vorrichtung nach einem der Ansprüche 1 bis 11, wobei der Gurt (10) ein erstes Gurtteil (11), dessen erstes Ende (11A) eines von dem ersten und dem zweiten Spannende bildet, und ein zweites Gurtteil (12), dessen erstes Ende (12A) das andere von dem ersten und dem zweiten Spannende bildet, umfasst, wobei das zweite Gurtteil einen Befestigungsteil bildet, der konfiguriert ist, um an einem Träger (18) befestigt zu werden.

13. Vorrichtung nach einem der Ansprüche 1 bis 12, wobei der Gurt (10) ein erstes Gurtteil (11), dessen erstes Ende (11A) eines von dem ersten und dem zweiten Spannende bildet, und ein zweites Gurtteil (12), dessen erstes Ende (12A) das andere von dem ersten und dem zweiten Spannende bildet, umfasst, die zweiten Enden (11B, 12B) des ersten und des zweiten Gurtteils durch ein Gelenk verbunden sind.

14. Vorrichtung nach Anspruch 13, wobei das zweite Ende (12B) des zweiten Gurtteils (12) einen Haltebereich (40) aufweist, in Bezug auf den das zweite Ende (11) des ersten Gurtteils (11) durch eine Schwenkachse (42) schwenkbar gehalten wird, der Haltebereich umfassend insbesondere einen Schlitz (44; 144,144'), in den das zweite Ende (11B) des ersten Gurtteils (11) eingeführt wird.

15. Vorrichtung nach Anspruch 14, wobei das erste Gurtteil (11) einen Torsionsbereich (50; 150) aufweist, der das zweite Ende (11B) des ersten Gurtteils im Wesentlichen in einen rechten Winkel zu einem laufenden Teil des ersten Gurtteils bringt, wobei die Schwenkachse (42) senkrecht in Bezug auf das zweite Ende des ersten Gurtteils ist, insbesondere indem sie in eine Bohrung (43) des zweiten Endes (11B) des ersten Gurtteils (11) eingreift, wobei diese Bohrung optional einen Bund (111') aufweist.

16. Vorrichtung nach Anspruch 15, wobei das zweite Ende des ersten Gurtteils eine Längsfalz (51) aufweist, entlang derer zwei Bandhälften (51A, 51B) des ersten Gurtteils (11) gegeneinander zurückgeführt werden, wobei sie optional aneinander gedrückt gehalten werden, beispielsweise durch Schweißen oder Clinchage (54).

17. Vorrichtung nach Anspruch 15 oder 16, wobei das erste Gurtteil einen Vorsprung aufweist, der sich auf der anderen Seite des Torsionsbereichs in Bezug auf das zweite Ende des ersten Gurtteils befindet.

18. Vorrichtung nach einem der Ansprüche 14 bis 17, wobei das zweite Ende (11B) des ersten Gurtteils (11) zwei parallele Laschen (111B, 111B') aufweist, die jeweils in einen Schlitz (144, 144') des Haltebereichs (40) eingeführt sind.

19. Vorrichtung nach Anspruch 18, wobei die zwei Laschen (111B, 111B') durch einen Ausschnitt (150') getrennt sind und das zweite Ende (11B) des ersten Gurtteils (11) einen Torsionsbereich (150) aufweist, umfassend zwei Torsionen, die jede der Laschen im Wesentlichen in einen rechten Winkel zu einem laufenden Abschnitt des ersten Gurtteils bringen.

## Claims

1. A device for clamping an object, comprising a belt (10) with at least a first and a second clamping end (11A, 12A) and a clamping member (14) which connects the two clamping ends while being retained relative to them so that the clamping of the clamping member moves the first and second clamping ends relative to each other so as to tighten the belt, the clamping member (14) being retained relative to at least the first clamping end (12A) via a spring (24) and a connecting piece (26), so that the clamping of the clamping member tends to move the connecting piece relative to the first clamping end against the elastic return of the spring, the connecting piece (26) being able to occupy, relative to the first clamping end (12A), a waiting position in which it holds the spring (24) with respect to the first clamping end.

2. The device according to claim 1, comprising a member for holding the connecting piece in the waiting position (28A, 29A, 28B, 29B), particularly a waiting clipping member.

3. The device according to claim 1 or 2, wherein the connecting piece (26) is configured to occupy a clamping threshold position which is reached by the clamping of the clamping member.

4. The device according to claim 3, comprising a threshold mark (29A, 29B) to note that the clamping threshold position has been reached, the threshold mark particularly comprising a threshold clipping member.

5. The device according to any of claims 1 to 4, wherein the connecting piece (26) is able to occupy a maximum clamping limit position, the device optionally comprising a maximum clamping stop (32A, 32B).

6. The device according to any of claims 1 to 5, wherein the connecting piece (26) forms a cage part in which the spring (24) is disposed, the connecting piece optionally having a portion (26A') for centering the spring (24).

7. The device according to claim 6, wherein the clamping member (14) comprises a clamping rod and the cage part formed by the connecting piece (26) has a retaining surface (26A") against which an element for retaining the clamping rod, such as a head (14A) of said rod, is retained, said retaining surface optionally comprising an anti-rotation member (27C') of the clamping rod (14) and being optionally located on an outer face of the spring (24) centering portion (26A').

8. The device according to any of claims 1 to 7 taken in combination with claim 2, wherein the connecting piece (26) has a U shape with two branches (27A, 27B), the connecting piece being plugged onto the first clamping end (12A) so that this first clamping end passes between the two branches, the member for holding the connecting piece in the waiting position (28A, 29A, 28B, 29B) comprising at least one holding protrusion protruding on the inner face of at least one of the two branches.

9. The device according to any of claims 1 to 8 taken in combination with claim 4, wherein the connecting piece (26) has a U shape with two branches (27A, 27B), the connecting piece being plugged onto the first clamping end (12A) so that this first clamping end passes between the two branches, the threshold mark (29A, 29B) comprising a mark protrusion protruding on the inner face of at least the one of the two branches.

10. The device according to any of claims 1 to 9 taken in combination with claim 5, wherein the connecting piece (26) has a U shape with two branches (27A, 27B), the connecting piece being plugged onto the first clamping end (12A) so that this first clamping end passes between the two branches, at least one of the two branches having a maximum clamping stop protrusion (32A, 32B).

11. The device according to any of claims 1 to 10, wherein the clamping member comprises a clamping rod (14) which is retained relative to the second clamping end (11A) of the belt (10) by a nut (14B).

12. The device according to any of claims 1 to 11, wherein the belt (10) comprises a first belt part (11) whose first end (11A) forms one of the first and second clamping ends and a second belt part (12) whose first end (12A) forms the other of the first and second clamping ends, said second belt part forming a fixing part configured to be fixed on a support (18).

13. The device according to any of claims 1 to 12, wherein the belt (10) comprises a first belt part (11) whose first end (11A) forms one of the first and second clamping ends and a second belt part (12) whose first end (12A) forms the other of the first and second clamping ends, the second ends (11B, 12B) of the first and second belt parts being connected by a hinge.

14. The device according to claim 13, wherein the second end (12B) of the second belt part (12) has a retaining area (40), relative to which the second end (11) of the first part belt (11) is pivotally retained by a pivot axis (42), the retaining area particularly comprising a slot (44; 144, 144') into which the second end (11B) of the first belt part (11) is inserted.

15. The device according to claim 14, wherein the first belt part (11) has a twist area (50; 150) bringing the second end (11B) of the first belt part substantially at right angles to a current part of the first belt part, the pivot axis (42) being perpendicular to said second end of the first belt part, particularly by being engaged in a drilling (43) of the second end (11B) of the first belt part (11), this drilling optionally having a flange (111').

16. The device according to claim 15, wherein the second end of the first belt part has a longitudinal fold (51) according to which two band halves (51A, 51B) of the first belt part (11) are brought against each other, by being optionally kept pressed against each other, for example by welding or clinching (54).

17. The device according to claim 15 or 16, wherein the first belt part has a boss located on the other side of the twist area relative to the second end of the first belt part.

18. The device according to any of claims 14 to 17, wherein the second end (11B) of the first belt part (11) has two parallel legs (111B, 111B') each inserted into a slot (144, 144') of the retaining area (40).

19. The device according to claim 18, wherein the two legs (111B, 111B') are separated by a cutout (150') and the second end (11B) of the first belt part (11) has a twist area (150) comprising two twists bringing each of the legs substantially at right angles to a current part of the first belt part.
